(19) Europäisches Patentamt / European Patent Office / Office européen des brevets

(11) **EP 4 769 545 A1**

(12) **EUROPEAN PATENT APPLICATION**
published in accordance with Art. 153(4) EPC


(43) Date of publication:
**01.07.2026 Bulletin 2026/27**

(21) Application number: **24883887.2**

(22) Date of filing: **24.05.2024**

(51) International Patent Classification (IPC):
***H01M 4/36*** *(2006.01)* ***H01M 10/00*** *(2006.01)*
***H01M 10/0567*** *(2010.01)*

(52) Cooperative Patent Classification (CPC):
**H01M 4/134; H01M 4/136; H01M 4/36; H01M 4/38; H01M 4/58; H01M 4/62; H01M 10/00; H01M 10/0525; H01M 10/0567;** Y02E 60/10

(86) International application number:
**PCT/CN2024/095188**

(87) International publication number:
**WO 2025/091874 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 CN 202311445267**



(71) Applicant: **Contemporary Amperex Technology Co., Limited**
**Ningde, Fujian 352100 (CN)**

(72) Inventors:
- **WU, Kai**
  **Ningde, Fujian 352100 (CN)**
- **LIU, Zhi**
  **Ningde, Fujian 352100 (CN)**
- **SHI, Dongyang**
  **Ningde, Fujian 352100 (CN)**
- **WANG, Yuzhen**
  **Ningde, Fujian 352100 (CN)**
- **CHENG, Zhipeng**
  **Ningde, Fujian 352100 (CN)**
- **DENG, Yaqian**
  **Ningde, Fujian 352100 (CN)**
- **LV, Ruijing**
  **Ningde, Fujian 352100 (CN)**

(74) Representative: **Gong, Jinping**
**CocreateIP**
**Neumarkter Straße 21**
**81673 München (DE)**


(54) **SILICON-CARBON COMPOSITE MATERIAL AND PREPARATION METHOD THEREFOR, SECONDARY BATTERY, AND ELECTRIC DEVICE**


(57) Provided are a silicon-carbon composite material and a preparation method therefor, a secondary battery, and an electric device. The silicon-carbon composite material includes a core and a coating coated on the surface of the core, the core includes a carbon matrix and a silicon-based material located on the surface of the carbon matrix; the silicon-based material includes a silicon cluster and a silicon carbide cluster, the silicon carbide cluster forms a network structure, and the silicon cluster is located in a gap of the network structure. The silicon-carbon composite material can eliminate the memory effect of silicon and improve the capacity retention rate.


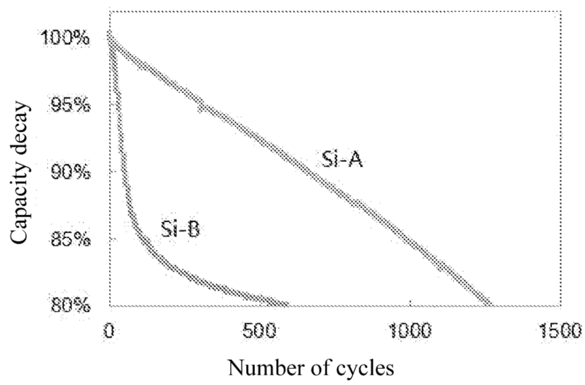


FIG. 11

EP 4 769 545 A1

## Description

CROSS-REFERENCE TO RELATED APPLICATIONS

The present application claims the priority of Chinese Patent Application No. 2023114452677, filed on November 2, 2023, and entitled "Silicon-carbon Composite Material and Preparation Method Therefor, Secondary Battery, and Electric Device", which is incorporated herein by reference in its entirety.

TECHNICAL FIELD

The present application relates to the field of battery material technologies, and in particular, to a silicon-carbon composite material and a preparation method therefor, a secondary battery, and an electric device.

BACKGROUND

The statement here merely provides the background information related to the present application and does not necessarily constitute the prior art.

In recent years, as the application range of lithium ion batteries becomes wider, lithium ion batteries are widely used in various fields such as energy storage power systems of hydraulic power stations, thermal power stations, wind power stations, and solar power stations, as well as power tools, electric bicycles, electric motorcycles, electric vehicles, military equipment, and aerospace. Due to the great development of the lithium ion batteries, higher requirements are also put forward for their energy density, cycling performance, safety performance, and the like.

Silicon-based materials have attracted attention due to their much higher capacity than carbon-based materials, because higher capacity means that higher energy density can be achieved. Therefore, conventional negative electrode sheets usually use silicon-based materials in combination with carbon-based materials. However, silicon is prone to memory effect in a cycle, which in turn decreases the capacity retention rate of batteries.

SUMMARY

The present application provides a silicon-carbon composite material capable of reducing the occurrence of memory effect of silicon and improving the capacity retention rate of a battery, a preparation method therefor, and a secondary battery and an electric device that use the silicon-carbon composite material.

According to a first aspect, the present application provides a silicon-carbon composite material, comprising a core and a coating coated on the surface of the core. The core comprises a carbon matrix and a silicon-based material located on the surface of the carbon matrix, the silicon-based material comprises a silicon cluster and a silicon carbide cluster, the silicon carbide cluster forms a network structure, and the silicon cluster is located in a gap of the network structure.

In the silicon-carbon composite material, the silicon-based material is disposed on the surface of the carbon matrix, silicon is used in combination with silicon carbide as the silicon-based material, the silicon carbide cluster can form a network structure by means of the conductivity of the carbon matrix, and the silicon cluster is located in a gap of the network structure, so that the memory effect of silicon can be reduced, and the capacity retention rate is improved.

In addition, compared with a silicon-oxygen material, the initial Coulomibic efficiency and the energy density can be improved by using silicon and silicon carbide as the silicon-based material. The presence of the coating can reduce the erosion of the core by an electrolyte solution in a cycle, and improve the stability of the network structure formed by the silicon carbide cluster, thereby further optimizing the capacity retention rate.

In some embodiments, the grain size of silicon crystallites in the silicon cluster is P, where $P \leq 5$ nm. The grain size of the silicon crystallites in the silicon cluster is relatively small, which can further reduce the possibility of long-range migration of Si atoms to form a crystalline $Li_{15}Si_4$ phase, thereby reducing the memory effect of silicon and improving the capacity retention rate. Further, $0.2\ nm \leq P < 2\ nm$.

In some embodiments, the carbon matrix comprises at least one of graphene oxide, graphene, fluorinated graphene, carbon nanotubes, mesoporous carbon, or carbon nanofibers.

In some embodiments, the coating comprises a carbon coating. The overall conductivity of the silicon-carbon composite material can be improved by using the good conductivity of carbon.

In some embodiments, the atomic ratio of silicon atoms to carbon atoms in the silicon-based material is 10:(0.1-9). Reasonably controlling the atomic ratio of silicon atoms to carbon atoms in the silicon-based material is beneficial to the formation of the network structure formed by the silicon carbide cluster, and better confines the silicon cluster in the gap of the network structure.

In some embodiments, the mass percentage of silicon is 5% to 80%, and the mass percentage of carbon is 20% to

95%, based on the mass of the silicon-carbon composite material. Reasonably controlling the mass percentages of silicon and carbon in the silicon-carbon composite material enables the material to have a relatively high content of silicon, thus obtaining a relatively high capacity per gram, and also prevents excessive silicon from increasing the expansibility of the material, so that the overall structure of the material is relatively stable in a charge-discharge cycle, which is beneficial to the improvement of the capacity retention rate.

According to a second aspect, the present application provides a preparation method for a silicon-carbon composite material, comprising the following steps:

depositing a silicon-based material on the surface of a carbon matrix to prepare a core, where the silicon-based material comprises a silicon cluster and a silicon carbide cluster, the silicon carbide cluster forms a network structure, and the silicon cluster is located in a gap of the network structure; and

preparing a coating on the surface of the core.

According to the preparation method, the silicon-based material is directly deposited on the surface of the carbon matrix, the corresponding network structure can be obtained by one-step deposition, and then the coating is prepared, so that the overall steps are simple, and the method is suitable for industrial popularization and application.

In some embodiments, a method for depositing the silicon-based material on the surface of the carbon matrix is a pulsed deposition method. The formation of the silicon carbide network structure and the size of silicon can be better controlled by using the pulsed deposition method.

In some embodiments, the method for depositing the silicon-based material on the surface of the carbon matrix comprises the following steps:

producing a carbon film from a material of the carbon matrix;

connecting electrodes at both ends of the carbon film; and

placing the carbon film with the electrodes connected at both ends thereof in a reaction vessel, applying a pulse current to the electrodes, and introducing a mixed gas of a silicon source gas and a carbon source gas to deposit the silicon-based material on the surface of the carbon film.

In the above steps, the conductivity of the carbon matrix is used, the carbon film is produced from the carbon matrix and then used as a connection unit between the electrodes, and the silicon-based material can be directly deposited on the surface of the carbon film without providing an additional electrical connection unit, which also simplifies the process flow of depositing the silicon-based material.

Further, the formation of the silicon carbide network structure and the size of silicon can be better controlled by reasonably regulating parameters such as a pulse current period, the volume ratio of the silicon source gas to the carbon source gas, and the flow rate at which the mixed gas is introduced in the process of depositing the silicon-based material.

In some embodiments, the method for depositing the silicon-based material on the surface of the carbon matrix has one or more of the following features:

(1) the pulse current has a period comprising pulse time of 1 ms to 1s and relaxation time of 10 ms to 10s;

(2) in the mixed gas, the molar ratio of silicon in the silicon source gas to carbon in the carbon source gas is 10:(0.1-9);

(3) the flow rate at which the mixed gas is introduced is 0.01 L/min to 0.5 L/min; and

(4) the temperature of the carbon film is ≥450°C during the deposition.

In some embodiments, the Dv50 of the core is 2 μm to 20 μm. The particle size of the core is reasonably controlled, which can reduce the diffusion distance of ions due to a relatively small particle size, and make the contact between particles closer, thereby contributing to the improvement of the capacity retention rate; and can also prevent excessively small Dv50 from increasing the processing difficulty, and thus is more convenient for industrial implementation.

In some embodiments, the preparing a coating on the surface of the core comprises:
mixing the core with the material of the coating, and sintering a resulting mixture to form the coating.

In some embodiments, the mass percentage of the material of the coating is 1% to 20% based on the mass of the mixture. As such, the core can be better coated, thereby reducing the erosion of the interior of the material by an electrolyte

solution in a cycle, and further improving the capacity retention rate.

According to a third aspect, the present application provides a negative electrode sheet, comprising a negative electrode current collector and a negative electrode active material layer disposed on at least one surface of the negative electrode current collector, where the negative electrode active material layer comprises the silicon-carbon composite material according to the first aspect or the silicon-carbon composite material prepared by using the preparation method according to the second aspect.

In some embodiments, the negative electrode active material layer further comprises a carbon-based material.

In some embodiments, the negative electrode active material layer has one or both of the following features:

(1) the mass percentage of the silicon-carbon composite material in the negative electrode active material layer is 1% to 80%; and

(2) the carbon-based material comprises at least one of synthetic graphite, natural graphite, hard carbon, soft carbon, or mesocarbon microbeads.

According to a fourth aspect, the present application provides a secondary battery, comprising the negative electrode sheet according to the third aspect.

According to a fifth aspect, the present application provides an electric device, comprising the negative electrode sheet according to the third aspect or the secondary battery according to the fourth aspect.

Details of one or a plurality of embodiments of the present application are set forth in the accompanying drawings and the description below. Other features, objectives, and advantages of the present application will be apparent from the specification, and the accompanying drawings, and the claims.

DESCRIPTION OF DRAWINGS

To better describe and illustrate embodiments and/or examples provided in the present application, reference may be made to one or a plurality of accompanying drawings. Additional details or examples used to describe the accompanying drawings should not be considered as limiting the scope of any of the disclosed application, the currently described embodiments or examples, and best modes of these applications as currently understood. Moreover, the same reference numerals are used to denote the same components throughout the accompanying drawings. In the accompanying drawings:

FIG. 1 is a schematic diagram of a structure of a reaction device formed by connecting electrodes at both ends of a carbon film according to an implementation of the present application;

FIG. 2 is a period of a pulse current in the process of depositing a silicon-based material on the surface of a carbon film according to an implementation of the present application;

FIG. 3 is a schematic diagram of a battery cell according to an implementation of the present application;

FIG. 4 is an exploded view of the battery cell shown in FIG. 3 according to an implementation of the present application;

FIG. 5 is a schematic diagram of a battery module according to an implementation of the present application;

FIG. 6 is a schematic diagram of a battery pack according to an implementation of the present application;

FIG. 7 is an exploded view of the battery pack shown in FIG. 6 according to an implementation of the present application;

FIG. 8 is a schematic diagram of an electric device using a secondary battery as a power supply according to an implementation of the present application;

FIG. 9 is a first TEM image of a Si/SiC@ graphene composite material prepared according to an implementation of the present application;

FIG. 10 is a second TEM image of a Si/SiC@ graphene composite material prepared according to an implementation of the present application; and

FIG. 11 is a cycling curve of a Si/SiC@ graphene composite material prepared in Embodiment 1 of the present application and a commercial Si@C material in Comparative Example 1 between 3.18 V and 4.2 V.

Description of reference signs:

1-battery pack; 2-upper case; 3-lower case; 4-battery module; 5-battery cell; 51-housing; 52-electrode assembly; 53-cover plate; 6-electric device.

DESCRIPTION OF EMBODIMENTS

The following appropriately describes some implementations of a silicon-carbon composite material and a preparation method therefor, a secondary battery, and an electric device in the present application in detail with reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand the present application, and are not intended to limit the subject matter described in the claims.

The "range" disclosed in the present application may be limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if ranges of 60 to 120 and 80 to 110 are listed for specific parameters, it is understood that the ranges of 60 to 110 and 80 to 120 are also expected. In addition, if the smallest values 1 and 2 of a range are listed, and if the largest values 3, 4 and 5 of the range are listed, the following ranges are all expected: 1 to 3, 1 to 4, 1 to 5, 2 to 3, 2 to 4, and 2 to 5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer selected from "2 to 10", it is equivalent to listing integers 2, 3, 4, 5, 6, 7, 8, 9, and 10.

Unless otherwise defined, "multiple", "a plurality of" and the like related in the present application mean a number of two or more. For example, "one or more" means one or greater than or equal to two.

Unless otherwise specified, all implementations and optional implementations of the present application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly, for example, all steps are performed sequentially in some examples. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A consists of a1, a2, and a3" and a feature or solution in which "A includes not only a1, a2, and a3 but also another member" are provided. In the present application, unless otherwise specified, A (e.g., B) means that B is a non-limiting example of A, and it may be understood

that A is not limited to B.

In the present application, "optionally", "optional", and "option" means that there is or not, that is, means any one of two parallel solutions: "with" or "without". If "option" occurs repeatedly in a technical solution, each "option" is independent, unless otherwise specified without inconsistency or mutual restriction.

Some examples of the present application provide a silicon-carbon composite material, including a core and a coating coated on the surface of the core. The core includes a carbon matrix and a silicon-based material located on the surface of the carbon matrix, the silicon-based material includes a silicon cluster and a silicon carbide cluster, the silicon carbide cluster forms a network structure, and the silicon cluster is located in a gap of the network structure.

The memory effect of silicon means that when a battery cell containing a silicon negative electrode is charged to a high SOC (≥90%) state, if power cannot be completely discharged in the discharge process, this part of residual capacity is stored in the negative electrode and cannot be discharged in the next charge and discharge process. As the number of charge-discharge cycles increases, capacity that cannot be discharged rapidly accumulates, resulting in rapid decay of available capacity of the battery cell. It is found that the main reason for the memory effect of silicon is that silicon usually undergoes long-range migration in the charge process, and when the amount of intercalated lithium is relatively large (for example, $x \geq 3.75$ in $Li_xSi$), silicon is gradually transformed from a partially amorphous lithium-silicon alloy into a crystalline lithium-silicon alloy ($Li_{15}Si_4$) with the long-range migration. However, due to poor diffusion kinetics, the crystalline lithium-silicon alloy needs to be discharged to a relatively low voltage (that is, power is completely discharged) to be transformed into an amorphous lithium-silicon alloy. In actual use, due to the fact that power cannot be completely discharged in the discharge process, a part of the crystalline lithium-silicon alloy remains in a silicon bulk phase, resulting in a large unavailable capacity, and as the number of charge-discharge cycles increases, unavailable capacity gradually accumulates, which in turn leads to rapid decay of available capacity.

In the silicon-carbon composite material, the silicon-based material is disposed on the surface of the carbon matrix, silicon is used in combination with silicon carbide as the silicon-based material, the silicon carbide cluster can form a network structure by means of the conductivity of the carbon matrix, and the silicon cluster is located in a gap of the network structure. During charging, due to the presence of the network structure formed by the silicon carbide cluster, long-range migration of silicon atoms can be limited, and the amorphous lithium-silicon alloy is difficult to be transformed into the crystalline lithium-silicon alloy when the amount of intercalated lithium is relatively large, so that the residual amount of the crystalline lithium-silicon alloy in the silicon bulk phase is greatly reduced during discharging, thereby reducing the memory effect of silicon and improving the capacity retention rate.

In addition, compared with a silicon-oxygen material, the initial Coulomibic efficiency and the energy density can be improved by using silicon and silicon carbide as the silicon-based material. The presence of the coating can reduce the erosion of the core by an electrolyte solution in a cycle, and improve the stability of the network structure formed by the silicon carbide cluster, thereby improving the structural stability of the silicon-based material, and further optimizing the capacity retention rate.

In some examples, the grain size of silicon crystallites in the silicon cluster is P, where $P \leq 5$ nanometers (nm). The grain size of the silicon crystallites in the silicon cluster is relatively small, which can further reduce the possibility of long-range migration of silicon atoms to form a crystalline lithium-silicon alloy, thereby reducing the memory effect of silicon and improving the capacity retention rate. In addition, the use of a relatively small grain size can also reduce the volume expansion of an electrode sheet and the consumption rate of active lithium in a cycle, thereby improving the cycle life. Further, $0.2\ nm \leq P \leq 5\ nm$. Furthermore, $0.2\ nm \leq P < 3.6\ nm$. Furthermore, $0.2\ nm \leq P < 2\ nm$. Without limitation, the grain size of the silicon crystallites in the silicon cluster can be characterized by measuring, on an TEM image, the diameter of a range in which lattice fringes are located. It may be understood that after the silicon-carbon composite material is applied to a secondary battery for charging and discharging, silicon crystallites in the silicon cluster are correspondingly transformed into amorphous particles.

In some examples, the carbon matrix includes at least one of graphene oxide, graphene, fluorinated graphene, carbon nanotubes, mesoporous carbon, or carbon nanofibers. It may be understood that when the carbon matrix is graphene oxide, the carbon matrix may be partially or completely reduced to graphene during processing. Also without limitation, the mesoporous carbon has a mesoporous pore size of 2 nm to 20 nm.

In some examples, the coating includes a carbon coating. The overall conductivity of the silicon-carbon composite material can be improved by using the good conductivity of carbon. Further, the carbon coating includes amorphous carbon.

In some examples, the atomic ratio of silicon atoms to carbon atoms in the silicon-based material is 10:(0.1-9). Reasonably controlling the atomic ratio of silicon atoms to carbon atoms in the silicon-based material is beneficial to the formation of the network structure formed by the silicon carbide cluster, and better confines the silicon cluster in the gap of the network structure. Specifically, the atomic ratio of silicon atoms to carbon atoms includes, but is not limited to, 10:0.1, 10:1, 10:2, 10:3, 10:4, 10:5, 10:6, 10:7, 10:8, 10:9, or a range between any two of the foregoing.

In some examples, the mass percentage of silicon is 5% to 80%, and the mass percentage of carbon is 20% to 95%, based on the mass of the silicon-carbon composite material. Reasonably controlling the mass percentages of silicon

and carbon in the silicon-carbon composite material enables the material to have a relatively high content of silicon, thus obtaining a relatively high capacity per gram, and also prevents excessive silicon from increasing the expansibility of the material, so that the overall structure of the material is relatively stable in a charge-discharge cycle, which is beneficial to the improvement of the capacity retention rate. Further, the mass percentage of silicon is 5% to 45%, and the mass percentage of carbon is 55% to 95%. Without limitation, the mass percentages of silicon and carbon may be characterized by observing the internal cross section of the material by SEM and semi-quantitatively characterizing the mass ratio of Si to C by EDS.

Some other examples of the present application provide a preparation method for a silicon-carbon composite material, including the following steps:

depositing a silicon-based material on the surface of a carbon matrix to prepare a core, where the silicon-based material includes a silicon cluster and a silicon carbide cluster, the silicon [0076] carbide cluster forms a network structure, and the silicon cluster is located in a gap of the network structure; and

preparing a coating on the surface of the core.

According to the preparation method, the silicon-based material is directly deposited on the surface of the carbon matrix, the corresponding network structure can be obtained by one-step deposition, and then the coating is prepared, so that the overall steps are simple, and the method is suitable for industrial popularization and application.

In addition, it may be understood that the silicon-carbon composite material related in the above preparation method has the same features and advantages as the silicon-carbon composite material in the above examples, and details are not described herein again.

In some examples, a method for depositing the silicon-based material on the surface of the carbon matrix is a pulsed deposition method. The formation of the silicon carbide network structure and the size of silicon can be better controlled by using the pulsed deposition method.

In some examples, the method for depositing the silicon-based material on the surface of the carbon matrix includes the following steps:

producing a carbon film from a material of the carbon matrix;

connecting electrodes at both ends of the carbon film; and

placing the carbon film with the electrodes connected at both ends thereof in a reaction vessel, applying a pulse current to the electrodes, and introducing a mixed gas of a silicon source gas and a carbon source gas to deposit the silicon-based material on the surface of the carbon film.

In the above steps, the conductivity of the carbon matrix is used, the carbon film is produced from the carbon matrix and then used as a connection unit between the electrodes, and the silicon-based material can be directly deposited on the surface of the carbon film without providing an additional electrical connection unit, which also simplifies the process flow of depositing the silicon-based material.

In some examples, the producing a carbon film from a material of the carbon matrix includes:

producing a slurry from the material of the carbon matrix; and

applying the slurry to a smooth matrix, and drying. Without limitation, the drying temperature may be 80°C to 130°C.

It may be understood that after the electrodes are connected at both ends of the carbon film, the electrodes are conducted by means of the carbon film. As an example, a reaction device is formed as shown in FIG. 1, where a carbon film 100 is formed on a matrix, and electrodes 200 are respectively connected at both ends of the carbon film 100 to form the reaction device, Q1 represents a silicon source gas, Q2 represents a carbon source gas, and both of Q1 and Q2 are deposited on the surface of the carbon film 100 to form the silicon-based material.

Further, the formation of the silicon carbide network structure and the size of silicon can be better controlled by reasonably regulating parameters such as a pulse current period, the volume ratio of the silicon source gas to the carbon source gas, and the flow rate at which the mixed gas is introduced in the process of depositing the silicon-based material.

In some examples, in the process of depositing the silicon-based material on the surface of the carbon film, the pulse current has a period as shown in FIG. 2, including pulse time of 1 ms to 1s and relaxation time of 10 ms to 10s. In the period of the pulse current, the deposition of silicon and carbon can be regulated, and silicon crystallites formed by deposition have a relatively small grain size. Specifically, the pulse time includes, but is not limited to, 10 ms, 20 ms, 50 ms,

70 ms, 100 ms, 150 ms, 200 ms, 250 ms, 300 ms, 350 ms, 400 ms, 450 ms, 500 ms, 550 ms, 600 ms, 650 ms, 700 ms, 750 ms, 800 ms, 850 ms, 900 ms, 950 ms, 1s, 2s, 3s, 4s, 5s, 6s, 7s, 8s, 9s, 10s, or a range between any two of the foregoing. The relaxation time includes, but is not limited to, 10 ms, 50 ms, 0.1 ms, 0.3 ms, 0.5s, 0.7s, 1s, 1.5s, 2s, 2.5s, 3s, 3.5s, 4s, 4.5s, 5s, 5.5s, 6s, 6.5s, 7s, 7.5s, 8s, 8.5s, 9s, 9.5s, 10s, or a range between any two of the foregoing.

In some examples, in the process of depositing the silicon-based material on the surface of the carbon film, in the mixed gas, the molar ratio of silicon in the silicon source gas to carbon in the carbon source gas is 10:(0.1-9). Specifically, the molar ratio of silicon in the silicon source gas to carbon in the carbon source gas includes, but is not limited to, 10:0.1, 10:0.5, 10:1, 10:2, 10:3, 10:4, 10:5, 10:6, 10:7, 10:8, 10:9, or a range between any two of the foregoing.

Without limitation, the silicon source gas includes one or more of monosilane, dichlorosilane, and silicon tetrachloride.

Without limitation, the carbon source gas includes at least one of ethylene, propylene, butene, butadiene, acetylene, or propyne.

In some examples, in the process of depositing the silicon-based material on the surface of the carbon film, the flow rate at which the mixed gas is introduced is 0.01 L/min to 0.5 L/min. Specifically, the flow rate at which the mixed gas is introduced is 0.01 L/min, 0.1 L/min, 0.2 L/min, 0.3 L/min, 0.4 L/min, 0.5 L/min, or a range between any two of the foregoing.

In some examples, in the process of depositing the silicon-based material on the surface of the carbon film, the temperature of the carbon film is ≥450°C during the deposition.

In some examples, the Dv50 of the core is 2 μm to 20 μm. The particle size of the core is reasonably controlled, which can reduce the diffusion distance of ions due to a relatively small particle size, and make the contact between particles closer, thereby contributing to the improvement of the capacity retention rate; and can also prevent excessively small Dv50 from increasing the processing difficulty, and thus is more convenient for industrial implementation. Specifically, the Dv50 of the core includes, but is not limited to, 2 μm, 5 μm, 8 μm, 10 μm, 12 μm, 15 μm, 17 μm, 20 μm or a range between any two of the foregoing. Further, the Dv50 of the core is 8 μm to 20 μm. Furthermore, the Dv50 of the core is 8 μm to 12 μm. Without limitation, the Dv50 of the core may be measured by using a laser particle size analyzer.

In addition, in some examples, after the silicon-based material is deposited on the surface of the carbon film, the method further includes a step of crushing and granulating the carbon film on which the silicon-based material is deposited, to prepare the core. By crushing and granulation, a desired core size is obtained.

In some examples, the method for preparing the coating on the surface of the core includes:

mixing the core with the material of the coating, and sintering a resulting mixture to form the coating.

It may be understood that the material of the coating needs to be better coated on the surface of the core during mixing. If the material of the coating is in a liquid state, the core can be better coated during mixing, so that the material of the coating can be directly used; or if the material of the coating is in a solid state, the material of the coating may be made into a slurry before mixing.

Without limitation, the material of the coating is a carbon source material, for example, one or more of glucose, polyvinyl alcohol, phenolic resin, polystyrene, polytetrafluoroethylene, polyacrylonitrile, polypropylene, polyacrylonitrile, coke, coal tar pitch, petroleum asphalt, liquid asphalt, and emulsified asphalt.

In some examples, the mass percentage of the material of the coating is 1% to 20% based on the mass of the mixture. As such, the core can be better coated, thereby reducing the erosion of the interior of the material by an electrolyte solution in a cycle, and further improving the capacity retention rate. Specifically, the mass percentage of the coating includes, but is not limited to, 1%, 8%, 10%, 12%, 15%, 17%, 20%, or a range between any two of the foregoing. Further, the mass percentage of the coating is 8% to 20%.

Without limitation, sintering is performed at a temperature of 850°C to 950°C for 1h to 5h.

Some other examples of the present application provide a negative electrode sheet, including a negative electrode current collector and a negative electrode active material layer disposed on at least one surface of the negative electrode current collector, where the negative electrode active material layer includes the silicon-carbon composite material as described above or the silicon-carbon composite material prepared by using the preparation method as described above.

In some examples, the negative electrode active material layer further includes a carbon-based material.

In some examples, the mass percentage of the silicon-carbon composite material in the negative electrode active material layer is 1% to 80%. Specifically, the mass percentage of the silicon-carbon composite material includes, but is not limited to, 1%, 5%, 10%, 15%, 25%, 30%, 35%, 40%, 45%, 50%, 55%, 60%, 65%, 70%, 75%, 80%, or a range between any two of the foregoing.

In some examples, the carbon-based material includes at least one of synthetic graphite, natural graphite, hard carbon, soft carbon, or mesocarbon microbeads (MCMBs).

Some other examples of the present application provide a secondary battery, including the negative electrode sheet as described above.

Some other examples of the present application provide an electric device, including the negative electrode sheet as described above or the secondary battery as described above.

Without limitation, the following appropriately describes the secondary battery and the electric device in the present application with reference to the accompanying drawings.

Generally, the secondary battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being short-circuited and allow ions to pass through.

Positive electrode sheet

It may be understood that deintercalation and consumption of lithium (Li) occur during charge and discharge of the battery, and the content of Li in the positive electrode sheet varies when the battery is discharged to different states. In the enumeration of positive electrode materials in the present application, unless otherwise specified, the content of Li is in an initial state of the material. When the positive electrode material is applied to a positive electrode sheet in a battery system, the content of Li in the positive electrode material contained in the electrode sheet usually changes after a charge and discharge cycles. The content of Li may be measured by using a molar content, but is not limited thereto. For "the content of Li is in an initial state of the material", the initial state of the material means a state before the material is added to a positive electrode slurry. It may be understood that a new material obtained by performing appropriate modification on the enumerated positive electrode material is also within the scope of the positive electrode material, the foregoing appropriate modification refers to an acceptable modification manner for the positive electrode material, such as coating modification, and a non-limiting example of the acceptable modification manner is, for example, coating modification.

In the enumeration of the positive electrode material in the present application, the content of oxygen (O) is only a theoretical state value, the molar content of oxygen changes due to the release of oxygen from a lattice, and the actual molar content of O fluctuates. The content of O may be measured by using a molar content, but is not limited thereto.

The positive electrode sheet includes a positive electrode current collector and a positive electrode active material layer disposed on at least one surface of the positive electrode current collector, and the positive electrode active material layer includes a positive electrode active material.

As a non-limiting example, the positive electrode current collector has two surfaces opposite to each other in its own thickness direction, and the positive electrode active material layer is disposed on either one or both of the two opposite surfaces of the positive electrode current collector.

In some embodiments, the positive electrode current collector may be metal foil or a composite current collector. For example, an aluminum foil can be used as the metal foil. The composite current collector may include a polymer material base layer and a metal layer formed on at least one surface of the polymer material base layer. The composite current collector may be obtained by forming a metal material on a polymer material substrate. In the positive electrode current collector, a non-limiting example of the metal material may include one or more of aluminum, an aluminum alloy, nickel, a nickel alloy, titanium, a titanium alloy, silver, a silver alloy, or the like. In the positive electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some embodiments, the positive electrode active material may be a positive electrode active material for a battery known in the art. As a non-limiting example, the positive electrode active material may include one or more of the following materials: olivine-structured lithium-containing phosphate, lithium transition metal oxide, and their respective modified compounds. However, the present application is not limited to these materials, and other conventional materials that can be used as a positive electrode active material of a battery may also be used. These positive electrode active materials may be used alone, or two or more thereof may be used in combination. An example of the lithium transition metal oxide may include, but is not limited to, one or more of lithium cobalt oxide (such as $LiCoO_2$), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. A non-limiting example of the olivine-structured lithium-containing phosphate may include, but is not limited to, one or more of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and their respective modified compounds. A non-limiting example of the lithium cobalt oxide may include $LiCoO_2$; a non-limiting example of the lithium nickel oxide may include $LiNiO_2$; a non-limiting example of the lithium manganese oxide may include $LiMnO_2$, $LiMn_2O_4$, or the like; a non-limiting example of the lithium nickel cobalt manganese oxide may include $LiNi_{1/3}Co_{1/3}Mn_{1/3}O_2$ (or may be referred to as $NCM_{333}$), $LiNi_{0.5}Co_{0.2}Mn_{0.3}O_2$ (or may be referred to as $NCM_{523}$), $LiNi_{0.5}Co_{0.25}Mn_{0.25}O_2$ (or may be referred to as $NCM_{211}$), $LiNi_{0.6}Co_{0.2}Mn_{0.2}O_2$ (or may be referred to as $NCM_{622}$), $LiNi_{0.8}Co_{0.1}Mn_{0.1}O_2$ (or may be referred to as $NCM_{811}$), or the like. A non-limiting example of the lithium nickel cobalt aluminum oxide may include $LiNi_{0.80}Co_{0.15}Al_{0.05}O_2$.

In some embodiments, the positive electrode active material layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent. As a non-limiting example, the conductive agent may include one or more of superconducting carbon, acetylene black, carbon black, ketjen black, carbon dots, carbon nanotubes, graphene, and carbon nanofibers.

In some embodiments, the positive electrode sheet may be prepared in the following manner: dispersing the foregoing components such as the positive electrode active material, the conductive agent, the binder, and any other components for preparing the positive electrode sheet in a solvent to form a positive electrode slurry; and applying the positive electrode slurry to at least one side surface of the positive electrode current collector, and performing procedures such as drying and cold pressing, to obtain the positive electrode sheet. The type of the solvent may be selected from, but is not limited to, any one of the foregoing implementations, for example, N-methylpyrrolidone (NMP). The surface of the positive electrode current collector to which the positive electrode slurry is applied may be a single surface of the positive electrode current collector or both surfaces of the positive electrode current collector. The surface of the positive electrode current collector to which the positive electrode slurry is applied may be a single surface of the positive electrode current collector or both surfaces of the positive electrode current collector. The solid content of the positive electrode slurry may be 40 wt% to 80 wt%. The viscosity of the positive electrode slurry at room temperature may be adjusted to 5000 mPa·s to 25000 mPa·s. When the positive electrode slurry is applied, the coating areal density on a dry weight basis (excluding the solvent) may be 15 $mg/cm^2$ to 35 $mg/cm^2$. The compaction density of the positive electrode sheet may be 3.0 $g/cm^3$ to 3.6 $g/cm^3$, optionally 3.3 $g/cm^3$ to 3.5 $g/cm^3$.

Negative electrode sheet

The negative electrode sheet is as described above.

In addition, as a non-limiting example, the negative electrode current collector has two surfaces opposite in its own thickness direction, and the negative electrode active material layer is disposed on either one or both of the two opposite surfaces of the negative electrode current collector.

In some embodiments, the negative electrode current collector may be metal foil or a composite current collector. For example, a copper foil may be used as the metal foil. The composite current collector may include a polymer material base layer and a metal layer formed on at least one surface of a polymer material substrate. The composite current collector may be obtained by forming a metal material on a polymer material substrate. In the negative electrode current collector, a non-limiting example of the metal material may include one or more of copper, a copper alloy, nickel, a nickel alloy, titanium, a titanium alloy, silver, a silver alloy, or the like. In the negative electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some embodiments, the negative electrode active material layer may further include another negative electrode active material for a battery well-known in the art. As a non-limiting example, the negative electrode active material may include one or more of the following materials: synthetic graphite, natural graphite, soft carbon, hard carbon, mesocarbon microbeads, a silicon-based material, a tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, the present application is not limited to these materials, and another conventional material that may be used as a negative electrode active material of a battery may also be used. These negative electrode active materials may be used alone, or two or more thereof may be used in combination.

In some embodiments, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethylchitosan (CMCS).

In some embodiments, the negative electrode active material layer further optionally includes a conductive agent. The conductive agent may include one or more of superconducting carbon, acetylene black, carbon black, ketjen black, carbon dots, carbon nanotubes, graphene, and carbon nanofibers.

In some embodiments, the negative electrode active material layer further optionally includes another auxiliary agent, for example, a thickening agent (such as sodium carboxymethyl cellulose (CMC-Na)), etc.

In some embodiments, the negative electrode sheet may be prepared in the following manner: dispersing the foregoing components such as the negative electrode active material, the conductive agent, the binder, and any other component for preparing the negative electrode sheet in a solvent (a non-limiting example of the solvent is for example deionized water) to form a negative electrode slurry; and applying the negative electrode slurry to at least one side surface

of the negative electrode current collector, and performing procedures such as drying and cold pressing, to obtain the negative electrode sheet. The surface of the negative electrode current collector to which the negative electrode slurry is applied may be a single surface of the negative electrode current collector or both surfaces of the negative electrode current collector. The solid content of the negative electrode slurry may be 40 wt% to 60 wt%. The viscosity of the negative electrode slurry at room temperature may be adjusted to 2000 mPa·s to 10000 mPa·s. When the negative electrode slurry is applied, the coating areal density on a dry weight basis (excluding the solvent) may be 75 g/m$^2$ to 220 g/m$^2$. The compaction density of the negative electrode sheet may be 1.0 g/cm$^3$ to 1.8 g/cm$^3$.

Electrolyte

The electrolyte functions to conduct ions between the positive electrode sheet and the negative electrode sheet. The type of the electrolyte is not particularly limited in the present application, and may be selected according to a requirement. For example, the electrolyte may be in a liquid state, a gel state, or an all-solid state.

In some embodiments, the electrolyte is an electrolyte solution. The electrolyte solution includes an electrolyte salt and a solvent.

In some embodiments, the electrolyte salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis-trifluoromethanesulfonimide (LiTFSI), lithium trifluoromethanesulfonate (LiTFS), lithium difluorophosphate ($LiPO_2F_2$), lithium difluoro(oxalato)borate (LiDFOB), lithium dioxalate borate (LiBOB), lithium difluorodioxalate phosphate (LiDFOP), and lithium tetrafluorooxalate phosphate (LiTFOP).

In some embodiments, the solvent may include one or more of ethylene carbonate (EC,

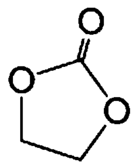

), propylene carbonate (PC,

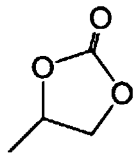

), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (

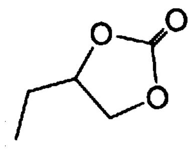

), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the additive in the electrolyte solution may include, but is not limited to, one or more of fluoroethylene carbonate (FEC), difluoroethylene carbonate (DFEC), trifluoromethyl ethylene carbonate (TFPC), or the like.

Separator

In some embodiments, the secondary battery further includes a separator. The type of the separator is not particularly limited in the present application, and any well-known porous separator with good chemical stability and mechanical stability may be used.

In some embodiments, a material of the separator may include one or more of glass fiber, non-woven fabric, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the thickness of the separator is 6 μm to 40 μm, optionally 12 μm to 20 μm.

In some embodiments, the positive electrode sheet, the negative electrode sheet, and the separator may be manufactured into an electrode assembly through a winding process or a lamination process.

In some embodiments, the secondary battery may include an outer package. The outer package may be used to package the electrode assembly and the electrolyte.

In some embodiments, the outer package of the secondary battery may be a hard shell, such as a hard plastic shell, an aluminum shell, or a steel shell. The outer package of the secondary battery may also be a pouch, such as a bag-type pouch. A material of the pouch may be plastic, and further, non-limiting examples of the plastic may include one or more of polypropylene, polybutylene terephthalate, and polybutylene succinate.

The secondary battery includes at least one battery cell. The secondary battery may include one or a plurality of battery cells.

In the present application, unless otherwise specified, a "battery cell" refers to a basic unit capable of implementing mutual conversion of chemical energy and electrical energy, and further, generally includes at least a positive electrode sheet, a negative electrode sheet, and an electrolyte. During charge and discharge of the battery, active ions are intercalated and deintercalated back and forth between the positive electrode sheet and the negative electrode sheet. The electrolyte functions to conduct active ions between the positive electrode sheet and the negative electrode sheet.

The shape of the battery cell is not particularly limited in the present application, and may be a cylindrical shape, a square shape, or any other shape. For example, FIG. 3 shows a battery cell 5 with a square structure as an example.

In some embodiments, referring to FIG. 4, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber. The positive electrode sheet, the negative electrode sheet, and the separator may be formed into an electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the battery cell 5, and the quantity may be selected by those skilled in the art according to actual requirements.

The secondary battery may be a battery module 4 or a battery pack 1.

The battery module includes at least one battery cell. There may be one or a plurality of battery cells included in the battery module, and a suitable quantity may be selected by those skilled in the art according to the application and capacity of the battery module.

FIG. 5 shows a battery module 4 as an example. Referring to FIG. 5, in the battery module 4, a plurality of battery cells 5 may be arranged sequentially in the length direction of the battery module 4. Certainly, the plurality of battery cells 5 may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some embodiments, the battery module may be further assembled into a battery pack, there may be one or a plurality of battery modules included in the battery pack, and a suitable quantity may be selected by those skilled in the art according to the application and capacity of the battery pack.

FIG. 6 and FIG. 7 show a battery pack 1 as an example. Referring to FIG. 6 and FIG. 7, a battery case and a plurality of battery modules 4 disposed in the battery case may be included in the battery pack 1. The battery case includes an upper case 2 and a lower case 3, the upper case 2 being capable of covering the lower case 3 and forming closed space for accommodating the battery modules 4. The plurality of battery modules 4 may be arranged in any manner in the battery case.

In addition, the present application further provides an electric device, including the secondary battery provided in the present application. The secondary battery may be used as a power supply for the electric device, or as an energy storage unit for the electric device. The electric device may include, but is not limited to, a mobile device, an electric vehicle, an electric train, a ship, a satellite, an energy storage system, and the like. For example, the mobile device may be a mobile

phone or a notebook computer. For example, the electric vehicle may be, but is not limited to, a full electric vehicle, a hybrid electric vehicle, a plug-in hybrid electric vehicle, an electric bicycle, an electric scooter, an electric golf cart, or an electric truck.

As an electric device, the secondary battery may be selected according to use requirements of the electric device.

FIG. 8 shows an electric device 6 as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the device may be a cell phone, a tablet computer, a notebook computer, or the like. This electric device is generally required to be thin and lightweight, and may use a secondary battery as a power supply.

Examples of the present application are described below. The example described below are illustrative only and are not to be construed as limiting the present application. Where techniques or conditions are not specified in the embodiments, the techniques or conditions described in documents in the art or the product manual shall be followed. The reagents or instruments used without specifying the manufacturer(s) are conventional products that are commercially available.

Embodiment 1

1) Preparation of a positive electrode sheet

A positive electrode active material (i.e., ternary material lithium nickel cobalt manganese oxide) (the molar ratio of nickel, cobalt and manganese is 95:2:3), conductive agent acetylene black, and binder polyvinylidene fluoride (PVDF) were uniformly mixed at a mass ratio of 97:2:1 and added to solvent NMP to prepare a positive electrode slurry; and the positive electrode slurry was uniformly coated on positive electrode current collector aluminum foil, dried at 85°C, cold-pressed, and then die-cut and slit to prepare a positive electrode sheet for a lithium ion battery.

2) Preparation of a negative electrode sheet

2.1 Preparation of a negative electrode active material

a) Graphene oxide (a carbon matrix) was dispersed in water to prepare a slurry, the slurry was applied to a smooth non-conductive matrix (mica), and dried at 110°C to form a film with a surface density of 3 mg/cm$^2$, and then two graphite electrodes were disposed at both ends of the matrix, where the electrodes were conducted by means of the graphene oxide.

b) The entire device in step a) was placed in a reaction chamber, and a monosilane (a silicon source) gas and an ethylene (a carbon source) gas were introduced at a gas flow rate of 0.05 L/min, where the volume ratio of monosilane gas to ethylene gas was 10:1.5 (i.e., the molar ratio of monosilane gas to ethylene gas was 10:1.5, and the molar ratio of silicon in the monosilane to carbon in the ethylene was 10:3).

c) A pulse current was applied to the electrodes with a pulse period including 50 ms pulse time and 0.5s relaxation time, so that the temperature on the graphene oxide reached 480°C, and a Si/SiC@ graphene composite material was obtained after 20 pulses; the Si/SiC@ graphene composite material was tested by TEM, as shown in FIG. 9 and FIG. 10, the grain size of silicon crystallites ranged from 0.2 nm to 2 nm, and silicon crystallite clusters were distributed in network gaps formed by silicon carbide crystallite clusters.

d) The Si/SiC@ graphene composite material prepared in step c) was crushed and granulated to prepare particles (a core) with the Dv50 of 10 μm.

e) The particles prepared in step d) were mixed with liquid asphalt (the material of a coating), where the mass percentage of the liquid asphalt was 10% based on the total mass of the particles and the liquid asphalt, to fully cover the surfaces of the particles, and then the particles were sintered at 900°C for 2h in an air atmosphere to obtain an amorphous carbon-coated Si/SiC@ graphene composite material powder (referred to as a silicon-carbon composite material).

Synthetic graphite and the silicon-carbon composite material were mixed (the mass ratio of the synthetic graphite to the silicon-carbon composite material was 3:1), then the resulting mixture, conductive agent acetylene black, thickening

agent carboxymethyl cellulose sodium (CMC-Na), and binder styrene-butadiene rubber (SBR) were added at a mass ratio of 96:2:1:1 to solvent water, and uniformly mixed to prepare a negative electrode slurry; the negative electrode slurry was uniformly coated on negative electrode current collector copper foil, dried at 85°C, and then cold-pressed to form a negative electrode sheet for a lithium ion battery.

3) Separator

A polyethylene microporous film was used as a porous separator substrate, and inorganic aluminum trioxide powder, polyvinylpyrrolidone, and an acetone solvent were uniformly mixed at a weight ratio of 3:1.5:5.5 to prepare a slurry, then the slurry was coated on one surface of the substrate and dried, where the thickness of the substrate was 7 μm, and the thickness of the coating was 3 μm, to obtain a separator.

4) Preparation of an electrolyte solution

Lithium hexafluorophosphate was dissolved in a mixed solvent of ethylene carbonate, dimethyl carbonate and ethyl methyl carbonate (the volume ratio of ethylene carbonate, dimethyl carbonate, and ethyl methyl carbonate was 1:2:1) to obtain an electrolyte solution for a lithium ion battery, where the concentration of lithium hexafluorophosphate was 1 mol/L.

5) Preparation of a battery

The positive electrode sheet, the negative electrode sheet, and the separator were wound to obtain a bare cell, and then the bare cell was subjected to procedures such as packaging, liquid injection, formation, and degassing to prepare a lithium ion battery.

The secondary batteries in Embodiments 2 to 20 were prepared by using methods similar to the method for preparing the secondary battery in Embodiment 1, with the main differences shown in Table 1 and Table 2.

A secondary battery in Comparative Example 1 was prepared by using a method similar to the method for preparing the secondary battery in Embodiment 1, with the main differences being that the prepared silicon-carbon composite material was replaced by a commercial Si@C material, the carbon matrix was porous carbon obtained by treating hard carbon, silicon crystallites were included on the secondary battery, the grain size was 6 nm to 8 nm (measured by TEM), the overall Dv50 of the Si@C material was 12 μm, the mass percentage of silicon was 45%, and the mass percentage of carbon was 55%.

A secondary battery in Comparative Example 2 was prepared by using a method similar to the method for preparing the secondary battery in Embodiment 1, with the main differences being that an ethylene gas was not introduced in step b, i.e., a silicon carbide cluster was not produced, and the amount of monosilane introduced was adjusted to keep the mass percentages of silicon and carbon in the silicon-carbon composite material the same as those in Embodiment 1.

Table 1

| | Silicon-based material (Si/SiC) | | Carbon matrix | Core | Material of coating | Silicon-carbon composite material | | Period of pulse current | | Mixed gas | Heating temperature |
|---|---|---|---|---|---|---|---|---|---|---|---|
| | Grain size of silicon crystallites | Atomic ratio of silicon atoms to carbon atoms | Type | Dv50 | Mass percentage | Mass percentage of silicon | Mass percentage of carbon | Pulse time | Relaxation time | Volume ratio of the silicon source gas to the carbon source gas | Heating temperature |
| Embodiment 1 | 0.2 nm to 2 nm | 10:3 | Graphene oxide | 10 μm | 10% | 45% | 55% | 50 ms | 0.5s | 10:1.5 | 480°C |
| Embodiment 2 | 2 nm to 3.6 nm | 10:3 | Graphene oxide | 10 μm | 10% | 45% | 55% | 200 ms | 2s | 10:1.5 | 520°C |
| Embodiment 3 | 3.6 nm to 5 nm | 10:3 | Graphene oxide | 10 μm | 10% | 45% | 55% | 1s | 10s | 10:1.5 | 600°C |
| Embodiment 4 | 0.2 nm to 2 nm | 10:0.1 | Graphene oxide | 10 μm | 10% | 49% | 51% | 50 ms | 0.5s | 10:0.05 | 480°C |
| Embodiment 5 | 0.2 nm to 2 nm | 10:1 | Graphene oxide | 10 μm | 10% | 47% | 53% | 50 ms | 0.5s | 10:0.5 | 480°C |
| Embodiment 6 | 0.2 nm to 2 nm | 10:5 | Graphene oxide | 10 μm | 10% | 44% | 56% | 50 ms | 0.5s | 10:2.5 | 480°C |
| Embodiment 7 | 0.2 nm to 2 nm | 10:7 | Graphene oxide | 10 μm | 10% | 43% | 57% | 50 ms | 0.5s | 10:3.5 | 480°C |
| Embodiment 8 | 0.2 nm to 2 nm | 10:3 | Carbon nano-fibers | 10 μm | 10% | 45% | 55% | 50 ms | 0.5s | 10:1.5 | 480°C |
| Embodiment 9 | 0.2 nm to 2 nm | 10:3 | Carbon nano-tubes | 10 μm | 10% | 45% | 55% | 50 ms | 0.5s | 10:1.5 | 480°C |
| Embodiment 10 | 0.2 nm to 2 nm | 10:3 | Mesoporous carbon (mesoporous pore size: 2 nm to 20 nm) | 10 μm | 10% | 45% | 55% | 50 ms | 0.5s | 10:1.5 | 480°C |

Table 2

| | Silicon-based material (Si/SiC) | | Carbon matrix | Core | Material of coating | Silicon-carbon composite material | | Period of pulse current | | Mixed gas | Heating temperature |
|---|---|---|---|---|---|---|---|---|---|---|---|
| | Grain size of silicon crystallites | Atomic ratio of silicon atoms to carbon atoms | Type | Dv50 | Mass percentage | Mass percentage of silicon | Mass percentage of carbon | Pulse time | Relaxation time | Volume ratio of the silicon source gas to the carbon source gas | Heating temperature |
| Embodiment 11 | 0.2 nm to 2 nm | 10:3 | Graphene oxide | 2 μm | 10% | 45% | 55% | 50 ms | 0.5s | 10:1.5 | 480°C |
| Embodiment 12 | 0.2 nm to 2 nm | 10:3 | Graphene oxide | 5 μm | 10% | 45% | 55% | 50 ms | 0.5s | 10:1.5 | 480°C |
| Embodiment 13 | 0.2 nm to 2 nm | 10:3 | Graphene oxide | 15 μm | 10% | 45% | 55% | 50 ms | 0.5s | 10:1.5 | 480°C |
| Embodiment 14 | 0.2 nm to 2 nm | 10:3 | Graphene oxide | 20 μm | 10% | 45% | 55% | 50 ms | 0.5s | 10:1.5 | 480°C |
| Embodiment 15 | 0.2 nm to 2 nm | 10:3 | Graphene oxide | 10 μm | 1% | 45% | 55% | 50 ms | 0.5s | 10:1.5 | 480°C |
| Embodiment 16 | 0.2 nm to 2 nm | 10:3 | Graphene oxide | 10 μm | 5% | 45% | 55% | 50 ms | 0.5s | 10:1.5 | 480°C |
| Embodiment 17 | 0.2 nm to 2 nm | 10:3 | Graphene oxide | 10 μm | 15% | 45% | 55% | 50 ms | 0.5s | 10:1.5 | 480°C |
| Embodiment 18 | 0.2 nm to 2 nm | 10:3 | Graphene oxide | 10 μm | 20% | 45% | 55% | 50 ms | 0.5s | 10:1.5 | 480°C |
| Embodiment 19 | 0.2 nm to 2 nm | 10:3 | Graphene oxide | 10 μm | 10% | 5% | 95% | 50 ms | 0.5s | 10:1.5 | 480°C |
| Embodiment 20 | 0.2 nm to 2 nm | 10:3 | Graphene oxide | 10 μm | 10% | 80% | 20% | 50 ms | 0.5s | 10:1.5 | 480°C |
| Comparative Example 2 | 0.2 nm to 2 nm | / | Graphene oxide | 10 μm | 10% | 45% | 55% | 50 ms | 0.5s | 10:0 | 480°C |

Note: In Embodiments 15 to 18, the coating amount of graphene oxide was changed while the mass percentage of the material of the coating was changed to keep the overall mass percentages of silicon and carbon in the material unchanged; and in Embodiments 19 and 20, the coating amount of graphene oxide was changed to change the overall mass percentages of silicon and carbon in the material.

Performance tests:

(1) Cycling test

The test was performed at a charge rate of 0.33C and a discharge rate of 0.33C in a cycle voltage range of 3.18 V to 4.2 V at 25°C. The specific process was as follows: the battery was charged from an initial voltage of 3.18 V to 4.2 V at a constant current of 0.33C and a constant voltage of 0.33C, left to stand for 10 min, then discharged to 3.18 V at a constant current of 0.33C, and left to stand for 10 min, and so on.

$$\text{Cycling capacity retention rate} = \text{discharge capacity at the } n^{th} \text{ cycle/discharge capacity at the first cycle.}$$

(2) Memory effect

Determine whether the memory effect is significant by the cycling decay trend of the first 50 cls. Taking (Si-A) in Embodiment 1 and (Si-B) in Comparative Example 1 as an example, cycling was performed in a range of 3.18 V to 4.2 V, and cycling curves of the (Si-A) in Embodiment 1 and the (Si-B) in Comparative Example 1 are shown in FIG. 11. The cycling decay trend of the (Si-B) in Comparative Example 1 declined rapidly in the first 50 cls, it can be thus determined that Comparative Example 1 has a significant memory effect, the overall cycling decay trend of Embodiment 1 was gentle, and there was no obvious sudden decline in the first 50 cls, it can be thus determined that the memory effect of the (Si-A) in Embodiment 1 is insignificant.

The test results are shown in Table 3.

Table 3

| Test results | **Capacity retention rate at 200 cycles** | **Memory effect** |
|---|---|---|
| Embodiment 1 | 96.6% | Insignificant |
| Embodiment 2 | 96.2% | Insignificant |
| Embodiment 3 | 95.5% | Insignificant |
| Embodiment 4 | 96.2% | Insignificant |
| Embodiment 5 | 96.3% | Insignificant |
| Embodiment 6 | 96.6% | Insignificant |
| Embodiment 7 | 96.4% | Insignificant |
| Embodiment 8 | 96.5% | Insignificant |
| Embodiment 9 | 96.5% | Insignificant |
| Embodiment 10 | 96.5% | Insignificant |
| Embodiment 11 | 93.0% | Insignificant |
| Embodiment 12 | 94.8% | Insignificant |
| Embodiment 13 | 95.9% | Insignificant |
| Embodiment 14 | 95.7% | Insignificant |
| Embodiment 15 | 92.5% | Insignificant |
| Embodiment 16 | 93.2% | Insignificant |
| Embodiment 17 | 96.6% | Insignificant |
| Embodiment 18 | 96.6% | Insignificant |
| Embodiment 19 | 96.8% | Insignificant |
| Embodiment 20 | 94.7% | Insignificant |
| Comparative Example 1 | 86.0% | Significant |
| Comparative Example 2 | 83.5% | Significant |

It can be learned from the comparison between the embodiments and the comparative examples that, in the present application, the silicon cluster is located in the gap of the network structure by introducing the network structure formed by the silicon carbide cluster, which can effectively improve the memory effect of silicon and improve the capacity retention rate.

The above descriptions of the various embodiments tend to emphasize differences between the various embodiments. For same or similar parts thereof, refer to these embodiments. For brevity, details are not described herein again.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. A silicon-carbon composite material, comprising a core and a coating coated on the surface of the core, wherein the core comprises a carbon matrix and a silicon-based material located on the surface of the carbon matrix, the silicon-based material comprises a silicon cluster and a silicon carbide cluster, the silicon carbide cluster forms a network structure, and the silicon cluster is located in a gap of the network structure.

2. The silicon-carbon composite material according to claim 1, wherein the grain size of silicon crystallites in the silicon cluster is P, wherein $P \leq 5$ nm.

3. The silicon-carbon composite material according to claim 2, wherein $0.2\ nm \leq P < 2\ nm$.

4. The silicon-carbon composite material according to any one of claims 1 to 3, wherein the carbon matrix comprises at least one of graphene oxide, graphene, fluorinated graphene, carbon nanotubes, mesoporous carbon, or carbon nanofibers.

5. The silicon-carbon composite material according to any one of claims 1 to 4, wherein the coating comprises a carbon coating.

6. The silicon-carbon composite material according to any one of claims 1 to 5, wherein the atomic ratio of silicon atoms to carbon atoms in the silicon-based material is 10:(0.1-9).

7. The silicon-carbon composite material according to any one of claims 1 to 6, wherein the mass percentage of silicon is 5% to 80%, and the mass percentage of carbon is 20% to 95%, based on the mass of the silicon-carbon composite material.

8. A preparation method for a silicon-carbon composite material, comprising the following steps:

    depositing a silicon-based material on the surface of a carbon matrix to prepare a core, wherein the silicon-based material comprises a silicon cluster and a silicon carbide cluster, the silicon carbide cluster forms a network structure, and the silicon cluster is located in a gap of the network structure; and
    preparing a coating on the surface of the core.

9. The preparation method for a silicon-carbon composite material according to claim 8, wherein a method for depositing the silicon-based material on the surface of the carbon matrix is a pulsed deposition method.

10. The preparation method for a silicon-carbon composite material according to claim 9, wherein the method for depositing the silicon-based material on the surface of the carbon matrix comprises the following steps:

    producing a carbon film from a material of the carbon matrix;
    connecting electrodes at both ends of the carbon film; and
    placing the carbon film with the electrodes connected at both ends thereof in a reaction vessel, applying a pulse

current to the electrodes, and introducing a mixed gas of a silicon source gas and a carbon source gas to deposit the silicon-based material on the surface of the carbon film.

**11.** The preparation method for a silicon-carbon composite material according to claim 10, wherein the method for depositing the silicon-based material on the surface of the carbon matrix has one or more of the following features:

(1) the pulse current has a period comprising pulse time of 1 ms to 1s and relaxation time of 10 ms to 10s;
(2) in the mixed gas, the molar ratio of silicon in the silicon source gas to carbon in the carbon source gas is 10:(0.1-9);
(3) the flow rate at which the mixed gas is introduced is 0.01 L/min to 0.5 L/min; and
(4) the temperature of the carbon film is ≥450°C during the deposition.

**12.** The preparation method for a silicon-carbon composite material according to any one of claims 8 to 11, wherein the Dv50 of the core is 2 μm to 20 μm.

**13.** The preparation method for a silicon-carbon composite material according to any one of claims 8 to 12, wherein the preparing a coating on the surface of the core comprises:
mixing the core with the material of the coating, and sintering a resulting mixture to form the coating.

**14.** The preparation method for a silicon-carbon composite material according to claim 13, wherein the mass percentage of the material of the coating is 1% to 20% based on the mass of the mixture.

**15.** A negative electrode sheet, comprising a negative electrode current collector and a negative electrode active material layer disposed on at least one surface of the negative electrode current collector, wherein the negative electrode active material layer comprises the silicon-carbon composite material according to any one of claims 1 to 7 or the silicon-carbon composite material prepared by using the preparation method according to any one of claims 8 to 14.

**16.** The negative electrode sheet according to claim 15, wherein the negative electrode active material layer further comprises a carbon-based material.

**17.** The negative electrode sheet according to claim 16, wherein the negative electrode active material layer has one or both of the following features:

(1) the mass percentage of the silicon-carbon composite material in the negative electrode active material layer is 1% to 80%; and
(2) the carbon-based material comprises at least one of synthetic graphite, natural graphite, hard carbon, soft carbon, or mesocarbon microbeads.

**18.** A secondary battery, comprising the negative electrode sheet according to any one of claims 15 to 17.

**19.** An electric device, comprising the negative electrode sheet according to any one of claims 15 to 17 or the secondary battery according to claim 18.

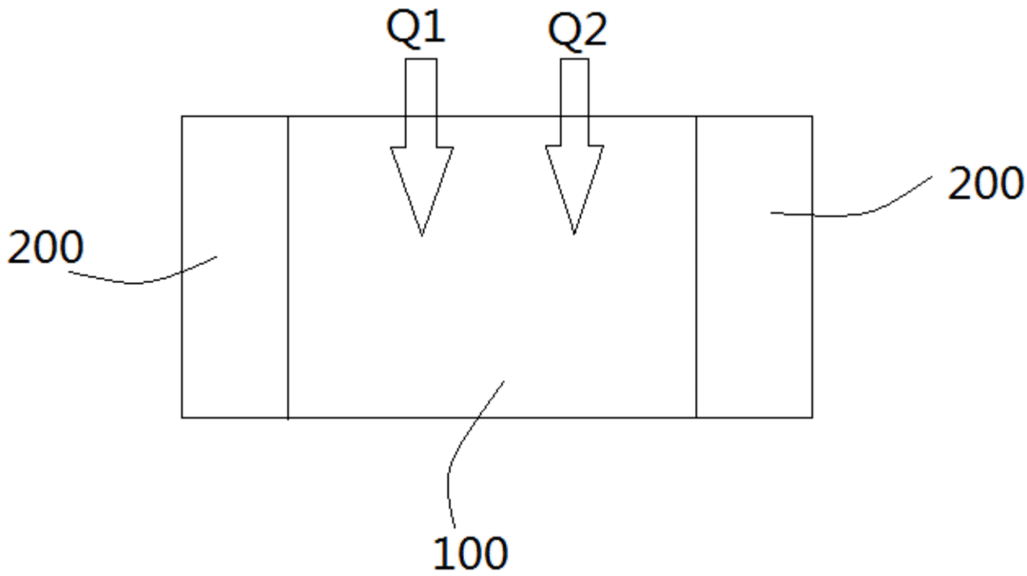


FIG. 1

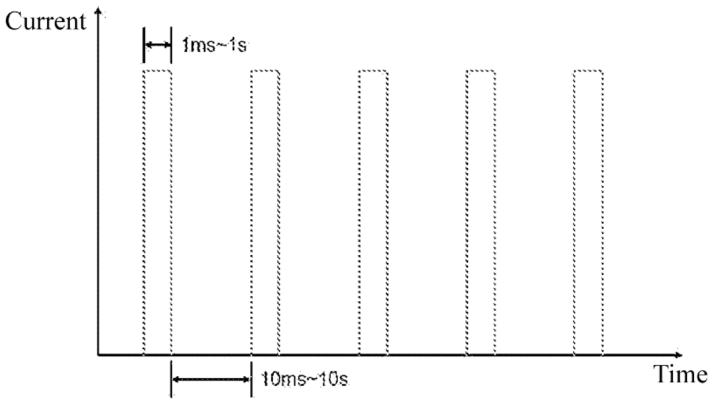


FIG. 2

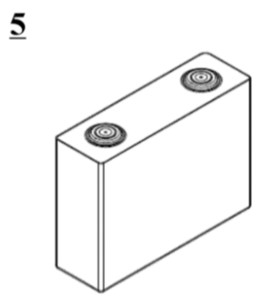


FIG. 3

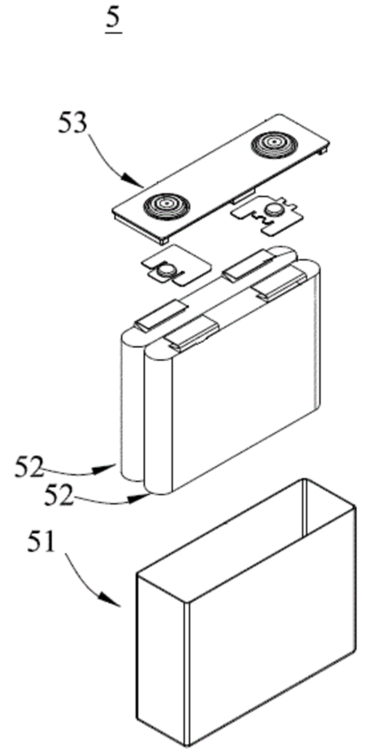


FIG. 4

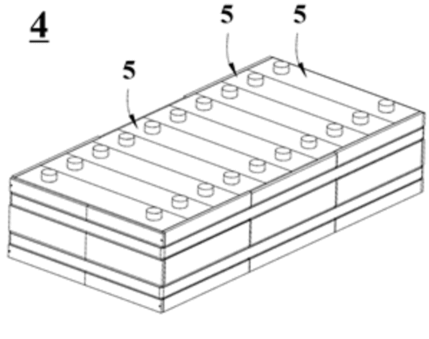


FIG. 5

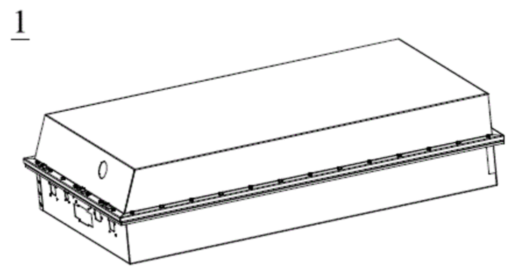


FIG. 6

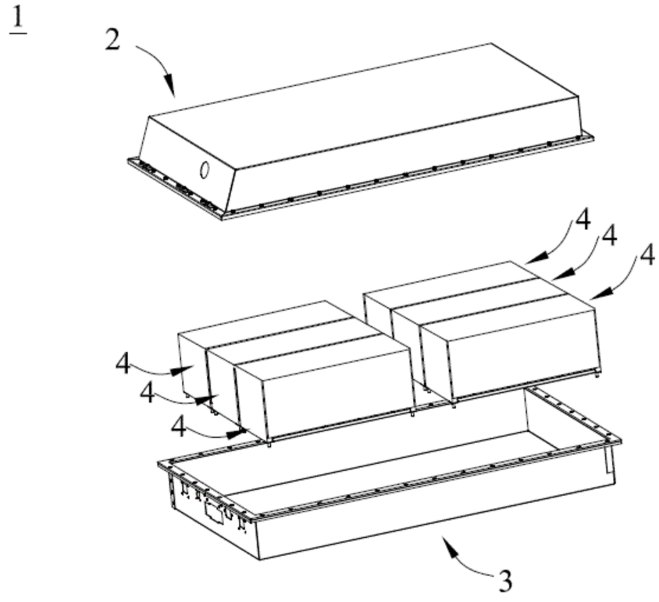


FIG. 7

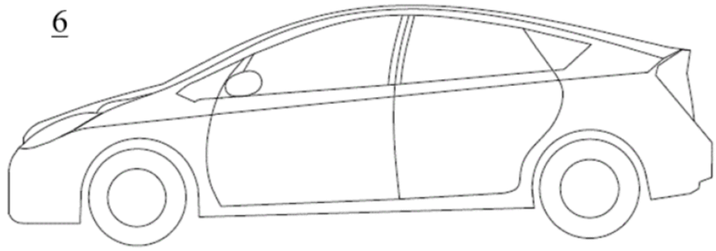


FIG. 8

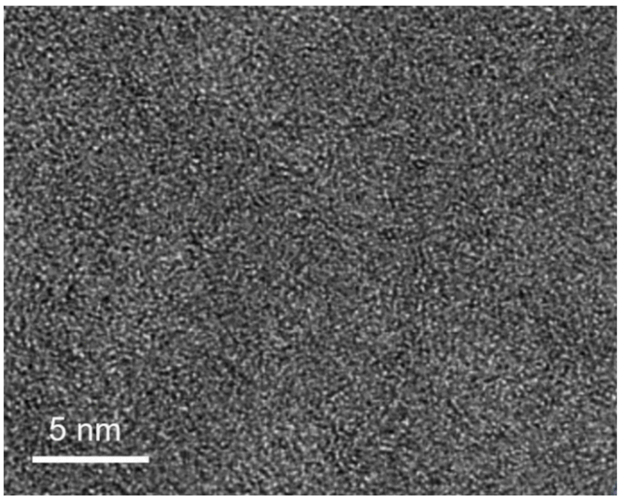


FIG. 9

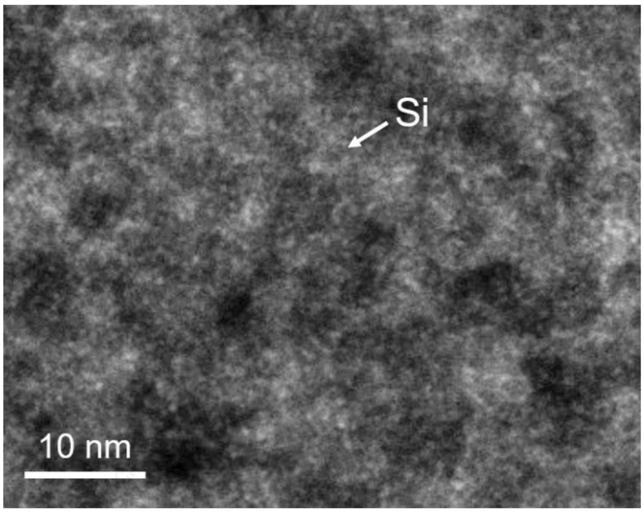
Si
10 nm

FIG. 10

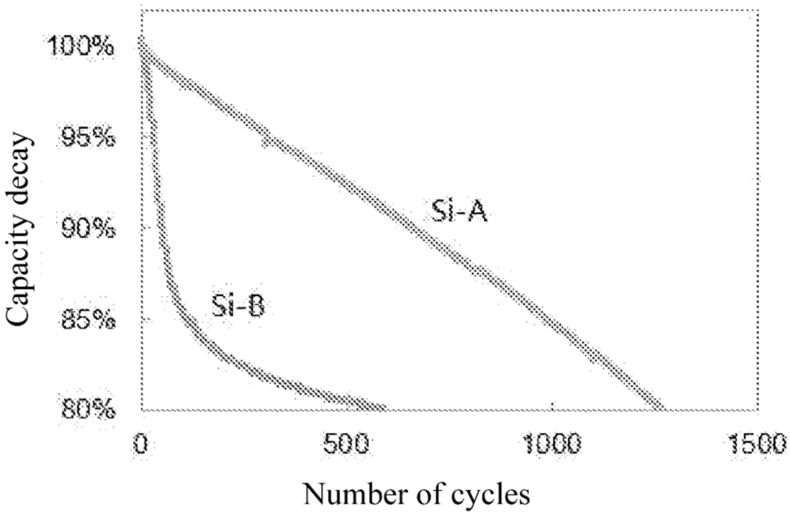
100%
95%
90%
85%
80%
Capacity decay
Si-A
Si-B
0
500
1000
1500
Number of cycles

FIG. 11

**INTERNATIONAL SEARCH REPORT**

International application No.
**PCT/CN2024/095188**

**A. CLASSIFICATION OF SUBJECT MATTER**

H01M4/36(2006.01)i； H01M10/00(2006.01)i； H01M10/0567(2010.01)i

According to International Patent Classification (IPC) or to both national classification and IPC

**B. FIELDS SEARCHED**

Minimum documentation searched (classification system followed by classification symbols)

IPC:H01M4,H01M10

Documentation searched other than minimum documentation to the extent that such documents are included in the fields searched

Electronic data base consulted during the international search (name of data base and, where practicable, search terms used)

CNTXT, DWPI, ENTXTC, CJFD: 包覆, 硅, 记忆效应, 内芯, 碳硅石, 碳化硅, 碳化物, 碳化矽, 炭化硅, 团簇, sic, silicon carbide , silicon carbide cluster, memory effect , inner core, core-shell

**C. DOCUMENTS CONSIDERED TO BE RELEVANT**

| Category* | Citation of document, with indication, where appropriate, of the relevant passages | Relevant to claim No. |
|---|---|---|
| X | CN 116759558 A (ANHUI DEYI ENERGY TECHNOLOGY CO., LTD.) 15 September 2023 (2023-09-15)<br>description, paragraphs 0010-0018 and 0079 | 1-19 |
| PX | CN 117174883 A (NINGDE CONTEMPORARY AMPEREX TECHNOLOGY CO., LTD.) 05 December 2023 (2023-12-05)<br>claims 1-19 | 1-19 |
| A | CN 108400302 A (TIANJIN UNIVERSITY) 14 August 2018 (2018-08-14)<br>entire document | 1-19 |
| A | CN 108751175 A (UNIVERSITY OF SCIENCE AND TECHNOLOGY LIAONING) 06 November 2018 (2018-11-06)<br>entire document | 1-19 |
| A | US 2002102398 A1 (NANYANG TECHNOLOGICAL UNIVERSITY) 01 August 2002 (2002-08-01)<br>entire document | 1-19 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 July 2024** | **20 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

INTERNATIONAL SEARCH REPORT

International application No.
**PCT/CN2024/095188**

**C. DOCUMENTS CONSIDERED TO BE RELEVANT**

| Category* | Citation of document, with indication, where appropriate, of the relevant passages | Relevant to claim No. |
|---|---|---|
| A | HE, Yuanhong et al. "Litchi-Structural Core–shell Si@C for High-Performance Lithium–ion Battery Anodes"<br>*IONICS*, Vol. 25, No. 12, 21 July 2019 (2019-07-21), 5809-5818<br>entire document | 1-19 |

Form PCT/ISA/210 (second sheet) (July 2022)

**INTERNATIONAL SEARCH REPORT**
**Information on patent family members**

International application No.
**PCT/CN2024/095188**

| Patent document cited in search report | Publication date (day/month/year) | Patent family member(s) | Publication date (day/month/year) |
|---|---|---|---|
| CN 116759558 A | 15 September 2023 | None | |
| CN 117174883 A | 05 December 2023 | None | |
| CN 108400302 A | 14 August 2018 | None | |
| CN 108751175 A | 06 November 2018 | None | |
| US 2002102398 A1 | 01 August 2002 | WO 0068455 A1 | 16 November 2000 |
| | | US 6387443 B1 | 14 May 2002 |
| | | US 6899828 B2 | 31 May 2005 |
| | | AU 4601100 A | 21 November 2000 |
| | | JP 2002544380 A | 24 December 2002 |
| | | GB 0126975 D0 | 02 January 2002 |
| | | GB 2369829 A | 12 June 2002 |
| | | GB 2369829 B | 01 October 2003 |
| | | GB 9910842 D0 | 07 July 1999 |
| | | US 6143142 A | 07 November 2000 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2023114452677